# EUROPÄISCHE PATENTSCHRIFT

(11) **EP 1 675 467 B1**
(45) Veröffentlichungstag und Bekanntmachung des Hinweises auf die Patenterteilung: **30.11.2016**
(21) Anmeldenummer: 04738116.5
(22) Anmeldetag: 29.07.2004
(51) Int. Cl.: A21D 6/00, A21D 10/00

(54) **VORTEIGKONZENTRAT FÜR GANZ ODER TEILWEISE HEFEGETRIEBENE BAC KWAREN**
PRE-DOUGH CONCENTRATE FOR BAKED PRODUCTS TOTALLY- OR PARTLY-RISEN WITH YEAST
CONCENTRE DE PRE-PATE POUR PRODUITS A CUIRE AU FOUR QUE L'ON A FAIT LEVER COMPLETEMENT OU PARTIELLEMENT AVEC DE LA LEVURE

(30) Priorität: 29.07.2003 CH 131503
(43) Veröffentlichungstag der Anmeldung: 05.07.2006
(73) Patentinhaber: PANADORO GROUP AG, 6300 Zug (CH)
(72) Erfinder: BURGERMEISTER, René, CH-9507 Stettfurt (CH); ZEHNDER, Bruno, CH-9535 Wilen b. Wil (CH); GROOTES ZIEGLER, Meiert Johan, CH-6332 Hagendorn (CH)
(74) Vertreter: Schneider Feldmann AG Patent- und Markenanwälte
(86) Internationale Anmeldenummer: PCT/CH2004/000476
(87) Internationale Veröffentlichungsnummer: WO 2005/009136

(56) Entgegenhaltungen:
- EP-A- 0 152 943
- EP-A- 0 570 580
- EP-A- 0 948 904
- WO-A-02/32229
- DE-A- 2 837 294
- GB-A- 2 039 206
- US-A- 5 433 966

## Beschreibung

Die vorliegende Erfindung betrifft ein Verfahren zur Herstellung eines Vorteigkonzentrates gemäss Oberbegriff des Anspruches 1.

Vorteige, die bei der Brotherstellung zwischen 20-40% der Gesamtteigmenge ausmachen, haben generell folgende Funktionen:
- Bildung von Milch- und Essigsäuren zur Kleberstabilisierung, zur Verbesserung der Brotfrischhaltung, sowie zum Schutz vor dem Fadenbazillus;
- Hefevermehrung;
- Bessere Einlagerung des Wassers durch die Vorquellung und Aufschliessung der kleberbildenden Eiweissstoffe;
- Bildung von Vorstufen von Brotaromastoffen durch den enzymatischen Abbau von Eiweiss, Fett und Stärke.

Die bekannten Hebel- oder Vorteigmethoden unterteilen sich in zwei Gruppen. Die Methode mit zugesetzter Backhefe bei der Vorteigherstellung ist heute am weitesten verbreitet. Bei der Alternativmethode, z.B. bei der Madre-/Sauerteigherstellung, wird auf die direkte Zugabe von Backhefe verzichtet, und der Vorteig wird mittels eines Madre (Mutterteig) geimpft. Die Hefen im Madre sind über mehrere Stufen, aus in der Raumluft vorhandenen wilden Hefen, herangezüchtet worden. Beide Methoden sind nicht nur sehr zeitaufwändig, sondern in Folge des benötigten Raumes und der infrastruktur für die grossen Volumina an Vorteig auch sehr kostenintensiv.

Aus solchen organisatorischen und finanziellen Gründen haben seit Anfang der 70er-Jahre die meisten Bäckereien sukzessive auf die direkte Teigführung, d.h. Teigherstellung mit Backmitteln und ohne Vorteig, umgestellt. Die für diesen Zweck benötigten Backmittel bestanden meistens aus Malzprodukten, vielfach ergänzt mit Säuren (z.B. Zitronensäure, Milchsäure), Calciumphosphaten, Lecithin (E322) als Emulgator und Ascorbinsäure (E300). Die heutigen Backmittel entsprechen noch weitgehend dieser Zusammensetzung. Anstatt Malzprodukte und Lezithin wird heute eine Kombination von biotechnologisch hergestellten Enzymen, Quellstoffen wie Weizenquellmehl oder Guarkernmehl (E412) und/oder Emulgatoren wie z.B. Diacetylweinsäureester (E472e), destillierte Monoglyzeriden (E471) usw., eingesetzt.

Die vielen Skandale in der Nahrungsmittelindustrie haben dazu geführt, dass der Konsument vermehrt naturnahe Produkte sucht. Das Umsatzwachstum bei Bioprodukten in den letzten Jahren belegt diese Entwicklung. Insbesondere bei Produkten des täglichen Bedarfs, wie z.B. Brot, kommt daher vermehrt der Wunsch auf, diese ohne Backmittel herzustellen. Nicht nur die Staubbildung bei der Anwendung (Allergien), sondern auch die vielen unerwünschten, oft sogar als gesundheitsschädlich empfundenen Zusatzstoffen führen zu einer immer stärkerer Ablehnung dieser Produkte.

Aus der EP-A-0 152 943 ist ein Verfahren zur Herstellung eines Vorteigkonzentrates bekannt, bei dem eine Mischung aus Weizenmehl und Weizenkleie bei 150 °C in einem Extruder mechanisch-thermisch vorbehandelt, das Extrudat mit u.a. Wasser, Hefe, Roggenmehl und Weizenmehr zu einem Teig verarbeitet, und der Teig gebacken wird. Der Teig enthält etwa 6,2 % Extrudat.

EP-A-0 948 904 offenbart ein Verfahren, bei dem Maismehl bei 220 °C hydrothermisch behandelt wird, wobei eine bspw. 37%ige Stärkeverkleisterung eintritt. Das erhaltene "HF"-Mehl wird nach Vermahlen zu Teilchengrössen von bspw. 200 Mikrometern unter Verwendung von Weizenmehl, Wasser, Zucker, Hefe etc. zu einem Teig verarbeitet und der Teig zu Brot gebacken.

WO-02/32229-A offenbart ein Verfahren, bei dem teilweise vorgekochte Maiskörner in einer alkalischen Lösung eingeweicht, nass oder trocken vermahlen und unter Zusatz von Wasser, Hefe und Fett zu einem Teig verarbeitet werden. Der thermisch-mechanisch vorbehandelte Mais liegt im Teig, der offensichtlich zur Herstellung von Backwaren eingesetzt wird, mit einem Gewichtsanteil von etwa 40% vor.

DE 2837294-A offenbart ein Verfahren, bei dem eine Mischung aus Weizenkleie, Weizenmehl, Weizengluten, Salz und Hefe in einem Extruder mit Wasser vermengt, auf 170 °C erhitzt und durch das Extrudermundstück gepresst wird.

GB-A-2039206 offenbart ein Verfahren, bei dem eine Mischung aus u.a. Mehl (z.B. Weizen- und Roggenmehl), Hefe und Wasser in einem Extruder auf 50 °C erhitzt, extrudiert und danach gebacken wird.

US-A-5433966 A offenbart ein Verfahren, bei dem thermisch (z.B. bei 128 °C) vorbehandeltes Weizenmehl mit Wasser, Salz und Hefe zu einem Teig verarbeitet und der gebacken wird.

Das Dokument EP-A-0570580, welches den nächstliegenden Stand der Technik darstellt, offenbart ein Verfahren zur Herstellung von Backwaren aus Hefeteig unter Verwendung eines Vorteigkonzentrates, das aus Wasser, Hefe, Zucker und Mehl gefertigt ist und gefroren gelagert wird, bevor es dem Grundteig zugeführt wird, wobei eine rasche Weiterverarbeitung angestrebt ist.

Es besteht daher das Bedürfnis, nach einer geeigneten Alternative zur Herstellung eines Vorteigkonzentrates gemäss Oberbegriff des Patentanspruches 1. Das erfindungsgemäss hergestellte Vorteigkonzentrat soll des Weiteren im Hinblick auf die Anwendung in Bäckereien eine geringe Dosierung (höchstens 10 Gew.% der Mehlmenge im Hauptteig), eine einfache Handhabung und nicht zuletzt eine genügende Haltbarkeit aufweisen. Auch soll die Akzeptanz des erfindungsgemäss hergestellten Vorteigkonzentrates durch sehr gute Verarbeitungseigenschaften (kurze Teigreifezeit, trockene, plastische Teige), eine Verbesserung der backtechnischen Eigenschaften (schneller Ofentrieb mit guter Krumen- und Krustenlockerung, schöne Krustenfärbung) sowie eine Verbesserung der sensorischen Eigenschaften (Geruch, Geschmack, Kauempfinden), erhöht werden. Schliesslich wird auch noch ein breites Einsatzgebiet, des erfindungsgemäss hergestellen Vorteigkonzentrates d.h. in verschiedensten Rezepturen mit unterschiedlichen Mehltypen und Mehlqualitäten, angestrebt.

Umfangreiche Versuche haben gezeigt, dass die wichtigsten funktionalen Vorzüge des erfindungsgemäss hergestellten Vorteigkonzentrats wie backtechnische Eigenschaften, Gebäcksgeruch und -geschmack oder Frischhaltung der Gebäcke usw. insbesondere vom (1) Haupttrockenrohstoff und dem (2) Herstellungsprozess (Fermentation) bestimmt werden. Darauf sowie (3) auf einige wesentliche Charakteristika des Vorteigkonzentrats wird nachfolgend im Überblick eingegangen, bevor anschliessend eine detaillierte Darstellung der Zusammensetzung des erfindungsgemäss hergestellten Vorteigkonzentrats und der Herstellungsschritte erfolgt.
(1) Das Vorteigkonzentrat basiert auf thermisch-modifizierten Mahlerzeugnissen aus Getreide, ergänzt mit Hefe und Wasser. Das Vorteigkonzentrat ist ein vollwertiges Ersatzprodukt für den Vorteig/Hebel mit je nach Kriterium ähnlichen, gleichen oder besseren funktionellen Eigenschaften als ein guter Vorteig aus den jeweiligen Getreideprodukten. Ausserdem unterscheidet sich das Vorteigkonzentrat durch die vorhandene Bioaktivität deutlich von den im Markt erhältlichen Backmitteln.
(2) Bezüglich des Herstellungsprozesses, insbesondere der Fermentation und der anschliessenden Lagerung, gelten folgende Charakteristika: Das frisch produzierte Vorteigkonzentrat beginnt sich sofort zu fermentieren und die Temperatur erhöht sich durch die Fermentationswärme rasch auf 26°C bis 36°C. Um eine Übererwärmung (insbesondere über 32°C), die unter anderem zur unerwünschten Säureentwicklung und zum Absterben der Hefe führen kann, zu vermeiden, muss die Kühlung möglichst schnell eingesetzt werden, was vorzugsweise mittels Umströmen mit Kaltluft von ca. 0° bis 2° C erfolgt. Auf diese Weise wird in ca. 3 Tagen eine Produkttemperatur von ca. 0 bis 4°C erreicht. Diese Temperatur genügt um den Fermentationsprozess auf ein Minimum zu reduzieren. Da die Fermentation in reduziertem Ausmass weitergeht, ist das Produkt kühl zu lagern, vorzugsweise mit Kaltluft umströmt in einem Temperaturbereich zwischen 0°C und 6°C. Das Vorteigkonzentrat wird dem Verbraucher mit einem optimalen Fermentationsgrad (minimal 4 Tage alt) und mit einer Temperatur von unter 6 °C angeliefert, verpackt in Einweg- oder Mehrweggebinden mit Plastikeinlage oder in einem Container. Die Haltbarkeit bei ordnungsgemässer Lagerung liegt bei bis zu 6 Monaten.
(3) Das Vorteigkonzentrat wird vorzugsweise als teigartige Paste für Bäckereien mit manueller Verwiegung oder als Flüssigprodukt/Suspension für Bäckereien mit automatischer .Zudosierung angeboten. Je nach Gehalt an Faserstoffen, Vorverquellung der Stärke, Hefeanteil und gewünschter Viskosität kann der Wasseranteil beim Vorteigkonzentrat von einer unteren Grenze von etwa 30 Gew.% für eine teigartige Paste bis zu einer oberen Grenze von etwa 90 Gew.% für ein Flüssigprodukt eingestellt werden. Beide Produkte werden auch mit voll integriertem Hefeanteil, das heisst als sogenannte alles in Einem oder "All-in-One" Produkte, angeboten.

Mengenmässig beansprucht das Vorteigskonzentrat zwischen 3 - 8 Gew.% der Mehlmenge im Hauptteig bzw. 1,5 - 5 Gew.% der Hauptteigmenge.

Das spezifische Gewicht des Vorteigkonzentrats in Form der teigförmigen Paste liegt zwischen 850 und 1000 g/Liter, vorzugsweise 900 und 950. Der pH-Wert des Vorteigkonzentrats beträgt je nach Grundrezeptur (Ascorbinsäuregehalt) und Art und Dauer der Fermentation zwischen zwischen 4,0 bis 6,5, vorzugsweise 4,7 bis 5,7. Der Anteil an aktiven Hefezellen beträgt 0,1-1,0 x 10⁶, vorzugsweise 0,8 x 10⁶ per Gramm Vorteigkonzentrat.

Der Gefrierpunkt liegt beim teigartig-pastenförmigen Vorteigkonzentrat bei ca. -5° C und beim Flüssigprodukt bei ca. -3°C.

Allgemein kann das Produkt für alle ganz- oder teilweise hefegetriebenen Gebäcke eingesetzt werden. Bei stark roggenhaltigen Gebäcken (>60% Roggenmehlanteil) ist, um die Backfähigkeit zu gewährleisten, nebst dem Vorteigkonzentrat zusätzlich ein Säuerungsmittel zuzugeben.

Generell können mit Einsatz des Vorteigkonzentrates bei allen hefegetriebenen Gebäcken die bestehenden Grundrezepte beibehalten werden. Zu korrigieren ist jedoch folgendes:
- Das Backmittel komplett ersetzen durch die gemäss Empfehlung angegebene Menge Vorteigkonzentrat.
- Enthält das Backmittel, nebst den backfördernden Stoffen, weitere rezeptbedingte Zutaten wie Milchpulver, Fettstoffe, Zucker, etc., sind diese in der erforderlichen Menge zusätzlich beizufügen.
- Die Hefemenge bei kurzer Teigführungszeit um ca. 10 % und bei langer Teigführung um ca. 30 % reduzieren, sofern die sonstigen Prozessparameter nicht verändert werden.
- Die Teigfestigkeit durch Erhöhung der Wasserschüttmenge anpassen. Enthält das Backmittel quellende Zutaten wie Guar- oder Quellmehle, ist dies in der Regel nicht erforderlich.

Das Vorteigkonzentrat eignet sich für alle bekannten Teigführungs- und Backsysteme wie die Gärverzögerungs- und Gärunterbrechungsmethode, das PATT-System sowie alle Vorback-, Kühl- und Tiefkühlsysteme.

Neben den oben bereits erwähnten gewünschten Eigenschaften zeichnet sich das erfindungsgemässe hergestellte Vorteigkonzentrat durch eine Beschleunigung der Teigentwicklung, eine Optimierung der Verarbeitungseigenschaften der Teige und die Förderung der sensorischen Eigenschaften der Gebäcke aus. Dies kommt vor allem beim besseren und stärkeren Gebäcksgeruch und Geschmack und bei den angenehmeren Verzehrseigenschaften wie einer kürzeren, mürberen Kruste und Krume zur Geltung.

Nachfolgend wird nun die Zusammensetzung des Vorteigkonzentrats sowie der erfindungsgemässe Herstellungsprozess im Detail beschrieben.

### Vorteigkonzentrat

### A. Haupttrockenrohstoff

Der Haupttrockenrohstoff umfasst ein Mahlerzeugnis aus Getreide, d.h. mechanisch zerkleinerte oder mechanisch veränderte Getreideprodukte (Cerealien). Darunter werden nachfolgend Graupen, Grütze, Flocken, Schrot, Gries, Dunst, Mehl, Gluten oder Quellmehl verstanden.

Für den Einsatz im Vorteigkonzentrat eignen sich die folgenden Ausgangsrohstoffe (Getreidearten).
a. Schliessfrüchte (Karyopsen) von Gräsern (Graminae) wie Weizen (Weich-, Hartweizen), Dinkel, Roggen, Mais, Reis, Gerste, Hafer, Sorghum, Hirse und Triticale;
b. stärkehaltige Körnerfrüchte wie Buchweizen, Amarant und Quinoa.

Wie noch beschrieben wird, muss das Mahlerzeugnis thermisch behandelt werden, damit es als Haupttrockenrohstoff für das Vorteigkonzentrat eingesetzt werden kann.

Vorzugsweise ist das Mahlerzeugnis ein Getreidemehl mit einer Partikeigrösse von mehrheitlich weniger als 180 µm. Versuche haben ergeben, dass Mahlerzeugnisse wie Weizen-, Gersten-, Triticate-, Roggen-, Dinkel-, Emmer-, Kamut-, Grünkern-, Einkorn-, Hafer- und Hirsemehle und Mischungen davon die besten Resultate bei der Verwendung im Vorteigkonzentrat erbringen. Auch andere Mahlerzeugnisse, wie zum Beispiel Mais, Reis und Sorghum, können in Mischungen mit anderen Getreidemehlen eingesetzt werden. Vorzugsweise sind Vollkornmehle oder Mahlerzeugnisse einzusetzen, die naturgemäss einen hohen Gehalt an Fett- und Faserstoffen besitzen. Auch gemälztes Getreide, speziell Gerste und Weizen, die eine thermische Modifizierung durchlaufen haben, eignen sich sehr gut für die Herstellung des Vorteigkonzentrats.

Um für die Herstellung des Vorteigkonzentrates eingesetzt werden zu können, muss der Haupttrockenrohstoff sein eigenes Trockengewicht an Wasser mindestens einmal, vorzugsweise mehrmals absorbieren können. Die Verbesserung der Wasserabsorption des Mahlerzeugnisses zur Verwendung im Vorteigkonzentrat wird erreicht, indem es thermisch vorbehandelt resp. modifiziert wird.

Die thermische Behandlung findet vorzugsweise zwischen 120 und 170 °C, besonders bevorzugt um 150 - 160 °C statt. Höhere Temperaturen führen nicht zu einer weiteren Verbesserung der funktionellen Eigenschaften, insbesondere der Wasseraufnahme, sondern es finden nur noch organoleptische Veränderungen statt, das heisst es entstehen Röstaromen. Die Dauer der Behandlung ist systembedingt und beträgt eine Sekunde bis mehrere Minuten.

Für die Behandlung der verwendeten Mahlerzeugnisse haben sich folgende thermische Modifizierungsverfahren als vorteilhaft erwiesen:
**Hydrothermische Verfahren:** Ein Verfahren, um eine Modifizierung von Mahlerzeugnissen aus Getreide zu erreichen, ist die hydrothermische Behandlung. Eine dafür geeignete Maschine ist der sogenannte Mikronisator (Infrarotbehandlung), bei dem im kontinuierlichen Betrieb das Material mit Hilfe von Infrarotstrahlern (Wärmeerzeuger) kurzzeitig behandelt wird. Dies führt dazu, dass durch den im Inneren der Getreidemahlerzeugnisse entstehenden Wasserdampf die Struktur (innere Gliederung) aufgelockert und die Stärke zum Teil verkleistert wird. Bei der Teigbereitung kann daher das Wasser rasch aufgenommen werden. Dieses Verfahren ist sehr verbreitet und wird in unterschiedlicher Geräteteilzusammenstellung gebaut. Zur gleichen Gruppe gehört auch das von der Mühlebaufirma Bühler entwickelte "Flour Heat Treatment (FHT)" - System.

**Druckthermische Verfahren (RMS).** Bei diesem Verfahren wird das Getreidemahlerzeugnis über ein Ventil in einen Sterilisator gefüllt, welches sich beim Füllvorgang in nach oben gerichteter Position befindet. Nach dem Füllvorgang wird das System geschlossen und Dampf dem Mahlerzeugnis direkt zugeführt, bis ein Druck von 3 bar abs. erreicht ist. Der Sterilisator wird gestartet und bleibt während des gesamten Sterilisationsvorgangs (20 min) in Rotation. Während des Füllvorgangs und der Sterilisation wird der rotierende Mantel mit einem Dampfdruck von 3,5 bar abs. indirekt beheizt. Während der gesamten Sterilisationszeit rotiert das System um sicherzustellen, dass alle Partikel einer vollständigen Sterilisation unterzogen werden. Nach dem Sterilisationsvorgang wird der überschüssige Dampf aus dem Produktraum entspannt. Anschließend nimmt ein Vakuumsystem den Betrieb auf, um überschüssigen Restdampf zu entfernen. Durch das Vakuumsystem ist ebenfalls eine Reduzierung der Temperatur des Mahlerzeugnisses (auf ca. 30°C) in Abhängigkeit von der Restfeuchte erzielbar. Der Entleerungsvorgang erfolgt durch das seitlich des Sterilisators befindliche Entleerungsventil, wobei der Mahlerzeugnissterilisator in Rotation bleibt.

**Mechanisch-thermisches Verfahren mittels Extrusion.** Ein weiteres Verfahren, welches sich bewährt hat, ist die Extrusion von Getreideprodukten. Dieses Verfahren erlaubt es, Getreidemahlerzeugnisse schnell und damit nährstoffschonend zu behandeln.

Bei diesem Verfahren, z.B. mittels eines Zweiwellen-Extruders der Firma Bühler, kann das Mahlerzeugnisverarbeitet werden. In einer vorteilhaften Ausführungsform beträgt die Wellenlänge 1.50 m und der Durchmesser beträgt 93 mm. Im ersten Viertel des Extruders wird ca. 15-16% Wasser zugegeben. Im Extruder wird das Getreidemahlerzeugnis thermisch (Extrusionstemperatur ca. 150 °C) und mechanisch (die max. Schneckendrehzahl beträgt 450 Umdrehungen pro Minute) verarbeitet. Da vorzugsweise nur mit etwa 50-60% der max. Umdrehungen gearbeitet wird, kann die mechanische Bearbeitung als eher schonend bezeichnet werden. Am Ende des Extruders ist eine Düsenplatte mit 24 Löchern mit einem Durchmesser von je 6 mm angebracht. Da mit wenig Umdrehungen gearbeitet wird und die Löcher in der Düsenplatte eher gross bemessen sind, baut sich ein verhältnismässig geringer Druck von max. 5 Bar im Extruder auf. Die Verweilzeit im Extruder bei obigen Parametern beträgt ca. 5 Sek. Das Extrudat verlässt den Extruder strangartig in einer pastösen Konsistenz. Durch Schneiden der Extrudatstränge direkt nach der Düsenplatte, entstehen eine Art Würfel. Diese werden abgesaugt, bei ca. 140°C getrocknet und mittels einer Hammermühle fein vermahlen.

**Mechanisch-thermisches Verfahren mittels Rotor (Prallmühle CP und Sichtermühle CSM).** Beide Mahlsysteme sind sehr ähnlich. Bei der Prällmühle sind die Rotoren horizontal und bei der Sichtermühle vertikal angeordnet. Die Vermahlung/Zerkleinerung erfolgt zwischen dem Rotor und der Mahlbahn, indem die schleudern. Die dabei erzeugten Drücke und die mechanische Erwärmung genügen in den meisten Fällen um eine ausreichende Modifizierung des Mahlerzeugnisses zu erhalten. Versuche haben bestätigt, dass ein nach diesem Verfahren modifiziertes Getreidemahlerzeugnis im Vorteigkonzentrat eingesetzt werden kann.

Für das Erhitzen der verwendeten Getreidemahlerzeugnisse haben sich wie beschrieben mechanisch-thermische, druckthermische oder hydrothermische (Heisslufterwärmen) Behandlungen als vorteilhaft erwiesen. In den bisherigen Versuchen hat sich gezeigt, dass die Art der Behandlung geringen bis keinen messbaren Einfluss auf die Eignung der Haupttrockenrohstoffe für die Herstellung des Vorteigkonzentrats hat. Wichtig ist jedoch, dass das zu behandelnde Getreidemahlerzeugnis vor der thermischen Modifizierung eine Feuchtigkeit von 10 - 19 % Gew.%, bevorzugt 13 Gew.% aufweist.

Ziel der thermischen Modifikation des Haupttrockenrohstoffes ist es, dass die im Getreide vorhandene Stärke je nach Stärkegehalt zu 30% bis 100% in vorverquollener Qualität vorliegt und dass das vorhandene Klebereiweiss mindestens zu 60% denaturiert wird.

Die vorverquollenen Stärkekörner haben eine grössere Oberfläche, binden somit mehr Flüssigkeit und lassen sich deshalb besser fermentieren. Das Klebereiweiss oder Gluten ist eine gummiähnliche, elastische Masse, die vorwiegend aus wasserunlöslichen Proteine dem Glutenin und Gliadin, besteht. Durch die thermische Behandlung verliert das Klebereiweiss bei Flüssigkeitsbeigabe, z.B. bei der Hauptteigherstellung, ganz oder teilweise seine Fähigkeit, neue Disulfid-Brücken (S-S Bindungen) zu bilden. Diese sogenannte bindende oder klebende Funktion ist eine der wichtigsten Eigenschaften bei der normalen Haupt-Teigherstellung. Bei der Herstellung vom Vorteigkonzentrat, der eine kurze Struktur haben muss, ist diese Funktion deshalb nur bedingt erwünscht.

### B. Übrige Trockenrohstoffe

Die übrigen Trockenstoffbeigaben dienen einerseits für die Strukturbildung des Vorteigkonzentrats mit bevorzugter kurzer Struktur, andererseits spielen diese bei der Herstellung der Backwaren eine entscheidende Rolle wie z.B. Garstabilität, Teigentwicklung etc. Sie sind je nach Qualität und Eigenschaft des Hauptrohstoffes in Ergänzung auszuwählen. Die wichtigsten übrigen Trockenstoffe sind:
- Weizenmehle
- Malzmehle
- Weizenkleber

So sind zum Beispiel bei der Verwendung von faserreichen Getreidemahlerzeügnissen (mehr als 15 Gewichtsprozent Faser) als Haupttrockenrohstoff Malzmehl, Weizenkleber und eventuell Weizenmehl für die Vorteigkonzentrat-Herstellung, erforderlich.

Wird - um ein weiteres Beispiel zu nennen - fein vermahlenes Vollkornmehl (ca.180 µm), das mit 160° C thermisch modifiziert wurde, eingesetzt, so wird ohne weitere Trockenrohstoffbeigabe eine einwandfreie Vorteigkonzentrat-Qualität erreicht. Beim Einsatz von gemälzter und anschliessend extrudierter, Gerste werden ohne weitere Trockenrohstoffbeigaben ebenfalls sehr gute Resultate erzielt.

### C. Nass-Rohstoffe

Die Nassrohstoffe dienen der Fermentation und der Strukturbildung im Vorteigkonzentrat und umfassen:
- Hefe, Hefemilch oder wild gezüchtete Hefe (Naturtrieb)
- Wasser

Je nach Wasseraufnahmekapazität der Trockenstoffe ist eine Nassrohstoffzugabe von ca. 40 - 50 Gew.% erforderlich. Bei Flüssig-Vorteigkonzentraten muss die Nass-Rohstoffbeigabe entsprechend der gewünschte Endviskosität angepasst sein. Bei einem zu hohen Anteil der Nassrohstoffe besteht während der Lagerung des Vorteigkonzentrats die Gefahr der Entmischung oder Sedimentierung.

Die Hefemenge im Vorteigkonzentrat hängt von der gewünschten Endanwendung ab. Für den reiner Fermentationsprozess des Vorteigkonzentrates ist eine Backhefebeigabe von 3 Gew.% des Totalgewichtes genügend. Wird jedoch mehr Hefe eingesetzt, so bedingt dies eine Reduktion der Hefemenge im Hauptteig. Ab ca. 15% Hefeanteil im Vorteigkonzentrat ist eine Hefebeigabe im Hauptteig bei langer Teigführung (ca. 2½ h) nicht mehr erforderlich.

### D. Funktionalstoffe

Je nach gewünschter Vorteigkonzentrat-Qualität sind folgende Funktionalstoffe vorteilhaft oder erforderlich:
- Ascorbinsäure oder Fruchtsaftextrakte mit natürlichem Ascorbinsäuregehalt (Vitamin C)
- Bienenhonig
- Enzyme (Amylase, Protease, Pentosanase)

Ascorbinsäure dient als Antioxidant im Vorteigkonzentrat und später als Mehlbehandlungsmittel bei der Hauptteigherstellung. Als Alternative kann ein Fruchtsaftkonzentrat mit einem hohen Ascorbinsäuregehalt (VitaminC) eingesetzt werden, zum Beispiel Acerolakirschensaftkonzentrat. Werden bei der Hauptteigherstellung mit Ascorbinsäure behandelte Weizenmehle (3-8 ppm Ascorbinsäure) eingesetzt, reduziert oder erübrigt sich die Zugabe von Ascorbinsäure beim Vorteigkonzentrat entsprechend.

Enzymatische Prozesse sind bei der Herstellung vom Vorteigkonzentrat sehr wichtig. Native Enzyme sind in folgenden Rohstoffen enthalten:
- im Haupttrockenrohstoff;,
- in enzymatisch aktiven Malzmehlen
- in der Hefe
- im Bienenhonig.

Bienenhonig enthält nebst vielen Zuckerstoffen auch Enzyme wie Amylasen, Proteasen und Glukoseoxidasen. Zusätze von weiteren Enzymen sind nur erforderlich bei ungenügenden Mengen an nativen Enzymen.

### E. Aschegehalt

Je nach Ausmahlungsgrad der verwendeten Getreideart variiert der Aschegehalt. Mehle mit einem hohen Schalenanteil beinhalten wesentlich mehr Mineralstoffe. Der mögliche Maximalwert des Aschegehaltes eines sehr dunklen Vorteigkonzentrat-Vorteiges liegt bei ca. 2 %. Der Minimalwert liegt bei einer sehr hellen Version bei ca. 0.3 %.

### Verfahren zur Herstellung des Vorteigkonzentrats

### A. Allgemein

Die meisten Fermentationsprozesse werden mit flüssigen Nährstoffbrühen durchgeführt. Bekannte Beispiele in der Lebensmittelindustrie sind die Produktion von Joghurt, Bier, Wein, Milchsäure und vielen Lebensmittelaromen. Die Lebensmittelindustrie benützt aber auch die sog. Solid-State Fermentation bzw. Solid Substrate Fermentation(SSF). Anstatt einer flüssigen Nährstoffbrühe werden bei SSF meistens feuchte Fest-Nährstoffe benutzt. Bekannte Beispiele sind die Produktion von französischem Käse, wie z.B. Roquefort und Brie, die Produktion von fermentierten Würstchen sowie die Produktion von asiatischen fermentierten Nahrungsmittel, wie Tempe und Sojasauce. In Asien wird SSF schon seit über 2'000 Jahren für die Fermentation von Lebensmitteln benutzt.

Substrate, die bei SSF benutzt werden, sind z.B. Getreide oder Bohnen. Die meisten SSF benutzen Schimmel, weil diese exzellente Produzenten von extrazellularen Hydrolasen sind, die Biopolymere, die in den festen Substraten vorhanden sind, aufbrechen. Sie sind fähig , sich bei den festen Partikeln anzusiedeln und einzudringen, d.h. sie müssen durch das Substrat nicht homogen gemischt werden, um eine effiziente Benützung des Substrats zu ermöglichen. Einige SSF benutzen aber auch Hefe (z.B. Saccheromyces cerevisiae) oder Bakterien, z.B. Lactobaccilli in Würstchen, Bazillus ssp im japanischen Natto und Aceto bacter ssp im chinesischen Essig.

Für das Vorteigkonzentrat wird ausschliesslich Hefe verwendet. Unter dem Begriff "Hefen" werden allgemein alle Pilze mit hefeähnlichem Wachstum verstanden. Meist handelt es sich um die Einzelzellen, die sich durch Sprossung oder Spaltung vermehren. Die eiförmigen Zellen haben eine Länge von 8 - 12 µm und einem Durchmesser von 4 - 8 µm. Im Fall der Backhefen unterscheiden sich diese Rassen nur geringfügig; sie gehören ausnahmslos der genannten Art "Saccharomyces cerevisiae" an. Diese Hefen zeichnen sich durch große Triebkraft und wenig kleberzerstörende Enzyme aus.

Traditionelle Backhefe besteht zu 99,5% aus reiner Zellsubstanz. Diese umfasst die Zellhaut, die die Zellflüssigkeit (Cytoplasma) und den Zellkern umschliesst. Im Zellkern befinden sich die Chromosomen, die die Rasse und somit sämtliche Eigenschaften der Backhefe bestimmen. Die "Farbe" der Backhefe wird beeinflusst durch die Melasselösung, in der die Backhefe gezüchtet wird. Die für den Verwender weitaus entscheidenderen Qualitätsmerkmale sind aber vor allem die Triebkraft und die Haltbarkeit.

Die Temperaturkontrolle bei SSF ist viel schwieriger als bei einer flüssigen Nährstoffbrühe, weil eine Schicht von festen Teilen mit Gas, z.B. CO₂ gefüllte Poren, die Wärme sehr schlecht leitet. Es ist sehr schwierig und uneffizient die Oberflächen in einem Bett von solch festen Stoffen zu kühlen. Dies bedeutet, dass ungewünschte Temperatursteigungen sich in den dickeren Schichten Fest-Nährstoffe schneller entwickeln.

### B. Mischung und Fermentation unter Verwendung von Presshefe oder Hefemilch

Das Vorteigkonzentrat wird unter Einsatz von normaler Presshefe, Hefemilch, dem bei der Presshefe anfallenden Filtrat oder einem Gemisch davon, fermentiert. Es werden keine künstlichen Säuren wie z.B. Essig-, Milchsäure oder Starterkulturen verwendet. Vorzugsweise umfasst das Vorteigkonzentrat :
- thermisch-modifizierte Mahlerzeugnisse aus Getreide (vorzugsweise 140°C - 160°C; Partikelgrösse 150-210µm, vorzugsweise 180 µm), vorzugsweise ein Getreidemehl mit einem hohen Faser- und Fettgehalt als Haupttrockenrohstoff;
- Hefe, wobei die Hefe Presshefe (ca. 28% Trockensubstanz TS) und/oder, Hefemilch (20% TS) umfasst, und vorzugsweise auch das bei der Presshefe-Herstellung anfallende Filtrat;
- Wasser.

Je nach Qualität, Eigenschaften des Haupttrockenrohstoffes und Anwendung werden weitere Rohstoffe, vorzugsweise
- Gemälzte Getreideprodukte, vorzugsweise Malzmehl
- Ascorbinsäure
- Enzyme [siehe oben]
zugegeben.

**C. Herstellung von Paste und/oder Flüssigprodukt:** Die Trockenstoffe werden zusammengewogen und gemischt. Anschliessend werden die Nassrohstoffe mit einer Ausgangstemperatur von ca. 3°C beigegeben und mit den Trockenstoffen zu einer teigartigen Paste vermischt und kurz geknetet.

Das frisch produzierte Vorteigkonzentrat mit einer Ausgangstemperatur von ca. 12°C bis 20°C beginnt sich sofort zu fermentieren und die Temperatur erhöht sich durch die Fermentationswärme rasch auf 26°C bis 36°C. Um eine Übererwärmung (insbesondere über 32°C), die unter anderem zur unerwünschten. Säureentwicklung und zum Absterben der Hefe führen kann, zu vermeiden, muss die Kühlung möglichst schnell eingesetzt werden, was vorzugsweise mittels Umströmen von Kaltluft von 0 bis 2° erfolgt. Auf diese Weise wird in ca. 3 Tagen eine Pastentemperatur von ca. 0 bis 4°C erreicht. Diese Temperatur genügt um den Fermentationsprozess auf ein Minimum zu reduzieren.

Beim Batchverfahren muss Rühren oder Bearbeiten des Vorteigkonzentrats während des Fermentationsprozesses möglichst unterlassen werden, da dadurch die gebildeten CO₂-Gase frei werden und die Fermentation und somit die Erwärmung wieder beschleunigt wird. Beim kontinuierlichen Verfahren muss die Bearbeitung möglichst schonend oder unter Schutzatmosphäre erfolgen.

Das Vorteigkonzentrat in Form einer teigartige Paste wird anschliessend in mit Plastikfolie ausgelegte Kunststoff-Gittergebinde (Masse 40 x 60 cm) portioniert und in einem mit Kaltluft von ca. 0°bis 6° C stark umströmten Ort gekühlt.

**Tabelle: Temperaturverlauf des Vorteigkonzentrats während der Fermentation bei einer Kühllufttemperatur von 2 °C.**

| | | | | | | | | | | | | |
|---|---|---|---|---|---|---|---|---|---|---|---|---|
| Stun den | 0 | 2 | 4 | 6 | 8 | 10 | 12 | 14 | 16 | 18 | 20 | 22 |
| T (°C) | 14.0 | 24.0 | 24.0 | 21.0 | 18.0 | 16.0 | 14.8 | 13.8 | 12.8 | 11.9 | 11.3 | 10.5 |
| Stun den | 24 | 26 | 28 | 30 | 32 | 34 | 36 | 38 | 40 | 42 | 44 | 46 |
| T (°C) | 10.0 | 9.6 | 9.3 | 8.8 | 8.6 | 8.2 | 8.0 | 7.7 | 7.5 | 7.3 | 7.1 | 6.9 |
| Stun den | 48 | 50 | 52 | 54 | 56 | 58 | 60 | 62 | 64 | 66 | 68 | 70 |
| T (°C) | 6.7 | 6.5 | 6.2 | 6.1 | 5.8 | 5.5 | 5.2 | 5.0 | 4.8 | 4.6 | 4.4 | 4.2 |

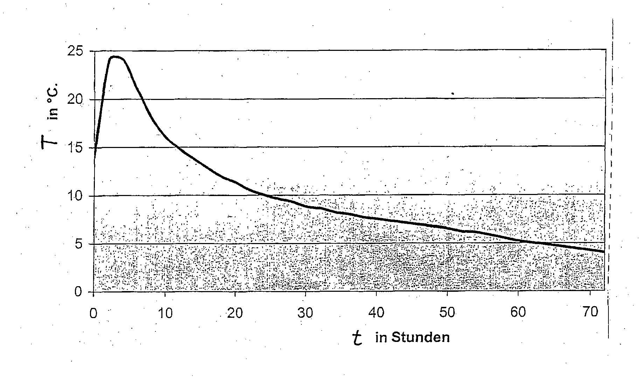

Die Figur zeigt den Temperaturverlauf des Vorteigkonzentrats während der Fermentation bei einer Kühllufttemperatur von 2°C. T stellt die Temperatur des Vorteiges dar und t die Fermentationszeit bei 2°+C (Kühltemperatur).

Wird der teigartigen Paste nach 2 Tagen Fermentation unter Rühren Eiswasser zugeführt, entsteht ein pumpfähiges Flüssigprodukt (Suspension), das in Behälter abgefüllt und gekühlt gelagert wird.

Die optimalen Prozessbedingungen für die Fermentation des Vorteigkonzentrates sind wie folgt:
- Das Produkt darf sich während des Fermentationsprozesses nicht über ca. 32°C erwärmen.
- Der Haupt-Fermentationsprozess muss möglichst bei tiefen Temperaturen (ca. 6°C) und vorwiegend im anaeroben Bereich erfolgen.
- Um möglichst strikte anaerobe Bedingungen zu erhalten, darf das Produkt während und nach dem Fermentationsprozess nicht bearbeitet werden.
- Der Haupt-Fermentationsprozess ist nach etwa 3 Tagen durch Kühlung auf ca. 2°-4°C auf ein Minimum zu reduzieren.

Gründe:
a) Der Hefe-Fermentationsprozess ist ein biologischer Prozess, bei dem vorwiegend Stärke und Zuckerstoffe zu Säuren, CO₂ und Alkohol abgebaut werden. Zudem entsteht bei diesem Prozess viel Wärme. Wird diese Wärme durch zu geringe Kühlung ungenügend abgeführt, steigt die Produkttemperatur, wodurch die klassische Hefeaktivität geringer wird. Dafür werden die Prozessbedingungen für die sogenannte nicht definierbare Begleitflora der Hefe, die aus ca. 60 bis 150 verschiedenen Organismen besteht besser. Diese Begleitflora ist bekannt für die übermässige Produktion von Säuren, wie Essig-, Milch- oder Propionsäure und anderen unerwünschten Abbauprodukte.
b) Ein Fermentationsprozess von ca. 3 Tagen im vorwiegend anaeroben Bereich (Tabelle 1, Stunde 4-72) fördert die Bildung von erwünschten Aromavorstufen (Precursors) und Aromastoffen.
c) Der Fermentationsprozess muss nach ca. 3 Tagen durch Kühlung auf ca. 2°C - 4°C weitgehend minimiert werden. Spätere Erwärmungen auf Temperaturen über ca. 6° C - 8°C genügen dann nicht mehr, um den Haupt-Fermentationsprozess wieder in Gang zu bringen. In Folge des hohen Isolationswert der Vorteigkonzentrationsmasse ist es ohnehin schwierig die Produkttemperatur rasch anzuheben.
d) Um den vorwiegend anaeroben Fermentationsprozess nicht zu stören darf das Produkt während dem Fermentations- und Kühlprozess nicht, oder höchstens unter Schutzatmosphäre (Stickstof oder ähnliches) bearbeitet (geknetet, gerührt, umgefüllt etc.) werden. Ansonsten wird das gebildete CO₂ freisetzt und mit neuem Sauerstoff erfolgt zuerst wieder eine aerobe Gärreaktionen.
e) Das gebildete C02 im Produkt reduziert die Hefeaktivität und dient zusammen mit dem gebildeten Alkohol zur Produktkonservierung. Mit der vorgegebenen Kühllagerung auf < 6 °C wird eine Haltbarkeit von mehreren Wochen erreicht.

Wie bereits oben erwähnt ist ein entscheidendes Merkmal des Vorteigkonzentrates die Bio- oder Hefeaktivität. Die Hefeaktivität lässt sich anhand der lebenden Hefezellen aus Vorteigkonzentrat bestimmen. In bevorzugten Vorteigkonzentrat-Produkten (mit ca. 5% Hefemilch auf das Totalgewicht) beträgt der Anteil an aktiven Hefezellen ca. 0.8 x 10⁶ pro Gramm Vorteigkonzentrat. Im gekühlten und anaeroben Bereich bleibt die Hefezellenzahl in Vorteigkonzentrat während der Lagerung nahezu konstant.

Nebst den Hefezellen besitzt die Backhefe eine sogenannte "nicht definierbare Begleitflora" an Mikroorganismen. Diese wird von den Hefeherstellern bewusst klein gehalten um den alkoholischen Fermentierungsprozess der Hefe nicht zu stören und um die Hefequalität hoch zu halten. Unter anderem sind dies auch Bakterien die Essig-, Milch- und Buttersäure erzeugen und zur Geschmacksverbesserung oder - Verschlechterung der Backwaren beitragen können. Einige unerwünschten Bakterien sterben ab durch die Stoffwechselprodukte der Hefe wie CO₂ und Alkohol.

In einer bevorzugten Form des Vorteigkonzentrates wird durch die Beigabe von Ascorbinsäure oder oben angeführter ascorbinsäurehaltiger Fruchtextrakte ein natürlicher Oxidationsschutz erreicht, der eine mehrmonatige Haltbarkeit der fermentierten, gekühlten Paste gewährleistet. Gleichzeitig aktiviert, stabilisiert und schützt Ascorbinsäure auch den Kleber bei der Führung des Hauptteiges bei der Backwarenherstellung.

### Beispiele:

### a) Pastenförmiges Vorteigkonzentrat für hefegetriebene Backwaren aus "dunklen oder hellen" unbehandelten Backmehlen

| Vorteigkonzentrat "dunkler/heller" Teig | bevorzugt | minimal | maximal |
|---|---|---|---|
| | % | % | % |
| Thermisch-modifizierte Mahlerzeugnisse aus Getreide | 38.7 | 10 | 50 |
| Diastase-Malzmehl | 6 | 0 | 20 |
| Weizenkleber | 5 | 0 | 10 |
| Ascorbinsäure | 0.2 | 0 | 1 |
| Enzyme | 0.1 | 0 | 1 |
| Hefemilch | 10 | 2 | 50 |
| Hefefiltrat/Wasser | 40 | 0 | 50 |
| Total | 100 | | |

### b) Vorteigkonzentrat in Suspension für hefegetriebene Backwaren aus "dunklen oder hellen" unbehandelten Backmehlen

| Vorteigkonzentrat "dunkler/heller" Teig | bevorzugt | minimal | maximal |
|---|---|---|---|
| | % | % | % |
| thermisch-modifizierte Mahlerzeugnisse aus Getreide | 22 | 6 | 30 |
| Diastase-Malzmehl | 3.7 | 0 | 15 |
| Weizenkleber | 2.2 | 0 | 8 |
| Ascorbinsäure | 0.1 | 0 | 0.5 |
| Enzyme | 0.05 | 0 | 0.5 |
| Hefemilch | 6 | 1 | 50 |
| Hefefiltrat/Wasser | 66 | 0 | 90 |
| Total | 100 | | |

Für die Beispiele weist die Hefemilch vorzugsweise einen TS-Gehalt von 18-22%, besonders bevorzugt von 20% auf.

### c) Pastenformiges Vorteigkonzentrat mit Naturhefe für hefegetriebene Backwaren aus "dunklen oder hellen" unbehandelten Backmehlen

| Vorteigkonzentrat "dunkler/heller" Teig | bevorzugt | minimal | maximal |
|---|---|---|---|
| | % | % | % |
| thermisch-modifizierte GetreideMahlerzeugnisse aus Getreide | 34 | 10 | 50 |
| Diastase-Malzmehl | 6 | 0 | 20 |
| Weizenkleber | 4.7 | 0 | 10 |
| Ascorbinsäure | 0.2 | 0 | 1 |
| Enzyme | 0.1 | 0 | 1 |
| Madre (Mutterteig) | 30 | 5 | 50 |
| Wasser | 25 | 0 | 45 |
| Total | 100 | | |

Madre oder Mutterteig besteht aus einer über mehrere Stufen und Tage herangezüchteter triebfähiger Kultur aus Getreidemehl, Wasser und wilden Hefen, die laufend dem Verbrauch entsprechend vermehrt werden muss. Da eine Madre wesentlich weniger aktive Hefezellen enthält als die Backhefe, ist die dosierung entsprechend hoch. Madre kann entweder selbst herangezüchtet werden - einschlägige Verfahren sind in der Literatur beschrieben - oder in vermehrungsfähiger Qualität zugekauft werden. Die Herstellung des Vorteigkonzentrates mit Madre entspricht der Herstellung mit Hefe.

### Verarbeitung des Vorteigkonzentrates

Das Vorteigkonzentrat hat bei der Verarbeitung in Backwarenbetrieben signifikante Vorteile, da es anstelle eines konventionellen Vortelges dem Hauptteig direkt bei der Zubereitung beigefügt werden kann. Bei den Versuchen wurde festgestellt, dass die notwendige Hefemenge unter derjenigen liegt, die bei einer konventionellen, direkten Teigführung mit Backmitteln notwendig wäre. Zudem waren die Teige deutlich schneller verarbeitbar als bei Backmittel- und Vorteigverwendung, was zu Zeitersparnis in der Produktion führt. Auch konnte die Wasserschüttmenge erhöht werden, d.h. eine höhere Teigausbeute wird erreicht. Vor allem hier hat das Vorteigkonzentrat grosse Vorteile gegenüber dem direkten Konkurrenten Vorteig, weil bei Vorteig bekanntlich eine deutlich geringere Teigausbeute erreicht wird. Die Teigausbeute des neuen Vorteigkonzentrats ist ähnlich wie bei guten Backmitteln.

Das Vorteigkonzentrat kann, wie bereits erwähnt, auch als "alt-in-one" Produkt angeboten werden, das heisst, es enthält schon die zur Endteigherstellung nötige Menge an Hefe, so dass dem Endteig keine Hefe mehr zugegeben werden muss. In der Bäckerei müssen dem "all-in-one" Produkt nur noch Mehl, Wasser und Salz zudosiert werden.

### Weitere Anwendungsbereiche

Da Roggenmehl bekanntlich kein Klebereiweiss hat, muss es durch Säuerung backfähig gemacht werden. Dies kann herkömmlich über eine Mehrstufenführung oder durch Zusatz von Säure oder stark säurehaltigen Backmitteln geschehen. Das Vorteigkonzentrat ist kein Säuerungsmittel und daher nur unter Zusatz von bekannten Säuerungsmitteln für Roggenbrote geeignet.

Die bereits seit langem bekannten Produkte mit ähnlicher Funktion stammen allesamt aus der Roggen- oder Roggenmischbrotproduktion.

## Patentansprüche

1. Verfahren zur Herstellung eines Vorteigkonzentrats, das ein thermisch-modifiziertes Mahlerzeugnis, Hefe und Wasser umfasst, wobei die Bestandteile zu einer dickflüssigen bis festen Paste oder einer Suspension vermengt werden, **dadurch gekennzeichnet, dass** die Paste oder Suspension nachfolgend auf 0°C bis 4°C innerhalb von 72 Stunden herabgekühlt wird.

2. Verfahren zur Herstellung eines Vorteigkonzentrats nach Anspruch 1, **dadurch gekennzeichnet, dass** die Hefe eine Hefe aus folgender Gruppe oder Mischungen davon umfasst: direkt zugegebene Presshefe, Hefemilch oder wild gezüchtete Hefe, die natürlich aus der Umgebungsluft angeimpft ist.

3. Verfahren nach Anspruch 1 oder 2, **dadurch gekennzeichnet, dass** die Haupt-Fermentation bei Temperaturen von 4°C bis 8°C, vorzugsweise etwa 6°C, durchgeführt wird.

4. Verfahren nach Anspruch 3, **dadurch gekennzeichnet, dass** die Haupt-Fermentation durch Abkühlen auf 0° bis 4°C, vorzugsweise auf 2°C stark gehemmt wird.

5. Verfahren nach Anspruch 1, **dadurch gekennzeichnet, dass** nach dem Vermengen eine Erwärmung des Vorteigkonzentrates auf 25 bis maximal 32°C zugelassen wird und innerhalb von 72 Stunden auf eine Pastentemperatur von etwa 0°C bis 4°C, vorzugsweise 2°C herabgekühlt wird.

6. Verfahren zur Herstellung des Vorteigkonzentrats nach einem der vorhergehenden Ansprüche 1 - 5, **dadurch gekennzeichnet, dass** zumindest ein thermischmodifiziertes Mahlerzeugnis, Hefe und Wasser zu einer dickflüssigen bis festen Paste vermengt und in einer Solid State Fermentation fermentiert werden.

7. Verfahren zur Herstellung von Backwaren, vorzugsweise Brot, **dadurch gekennzeichnet, dass** ein nach einem der vorhergehenden Ansprüche 1 bis 6 hergestelltes Vorteigkonzentrat mit Mehl, Wasser und Kochsalz zu einem Endteig vermengt und in direkter Teigführung verarbeitet wird.

8. Verfahren gemäss Anspruch 7, **dadurch gekennzeichnet, dass** ein Anteil von1.5 bis 5 Gew.% Vorteigkonzentrat gemäss einem der Ansprüche 1 bis 6 unter Verwendung von Weizenmehl zu einem Endteig verarbeitet wird.

9. Verfahren nach Anspruch 7, **dadurch gekennzeichnet, dass** das Klebereiweiss der thermisch-modifizierten Mahlerzeugnisse zu mindestens 60% denaturiert wird.

10. Verfahren nach Anspruch 8, **dadurch gekennzeichnet, dass** die thermisch-modifizierten Mahlerzeugnisse 6 bis 50 Gew.%, vorzugsweise 22 bis 39 Gew.% des Vorteigkonzentrates ausmachen.

## Claims

1. Method for producing a pre-dough concentrate that contains a thermally modified product of milling, yeast and water, wherein the components are mixed to create a viscous to firm paste or suspension, **characterized in that** the paste or suspension is then cooled to a temperature from 0 °C to 4 °C within 72 hours.

2. Method for preparing a pre-dough concentrate according to claim 1, **characterized in that** the yeast contains a yeast from the following group or mixtures thereof: directly added compressed yeast, yeast milk or wild bred yeast that is naturally inoculated from the ambient air.

3. Method according to claim 1 or 2, **characterized in that** the main fermentation is carried out at temperatures from 4 °C to 8 °C, preferably about 6 °C.

4. Method according to claim 3, **characterized in that** the main fermentation is considerably inhibited by cooling to a temperature from 0 °C to 4 °C, preferably to 2 °C.

5. Method according to claim 1, **characterized in that** after mixing, it is permissible to heat the pre-dough concentrate up to 25 and not exceeding 32 °C and it is then cooled down to a paste temperature of about 0 °C to 4 °C, preferably 2 °C, within 72 hours.

6. Method for producing the pre-dough concentrate according to any one of the preceding claims 1 - 5, **characterized in that** at least one thermally-modified product of milling, yeast and water is/are mixed to create a viscous to firm paste and fermented in a solid state fermentation process.

7. Method for producing baked goods, preferably bread, **characterized in that** a pre-dough concentrate produced according to any one of the preceding claims 1 to 6 is mixed with flour, water and common salt to create a final dough and is processed directly.

8. Method according to claim 7, **characterized in that** a quantity from 1.5 to 5% by weight of the pre-dough concentrate according to any one of the preceding claims 1 to 6 is processed using wheat flour to create a final dough.

9. Method according to claim 7, **characterized in that** the gluten of the thermally modified products of milling are at least 60% denatured.

10. Method according to claim 8, **characterized in that** the thermally modified products of milling constitute 6 to 50% by weight, preferably 22 to 39% by weight of the pre-dough concentrate.

## Revendications

1. Procédé de préparation d'un concentré de levain comprenant un produit de meunerie thermiquement modifié, de la levure et de l'eau, les constituants étant mélangés pour former un pâte fortement visqueuse voire solide ou une suspension, **caractérisé en ce que** ladite pâte ou suspension est ensuite refroidie, au cours d'une période de 72 heures, de manière à atteindre 0 °C à 4 °C.

2. Procédé de préparation d'un concentré de levain selon la revendication 1, **caractérisé en ce que** ladite levure comprend une levure appartenant au groupe suivant ou leurs mélanges : levure fraîche à ajouter directement, concentrés liquides de levure, levure multipliée à partir de germes naturellement présents dans l'air ambiant.

3. Procédé selon les revendications 1 ou 2, **caractérisé en ce que** la fermentation principale est réalisée à des températures comprises entre 4 °C et 8 °C, de préférence à environ 6 °C.

4. Procédé selon la revendication 3, **caractérisé en ce que** la fermentation principale est fortement ralentie par un refroidissement réalisée de manière à atteindre 0 °C à 4 °C, de préférence 2 °C.

5. Procédé selon la revendication 1, **caractérisé en ce que**, suite au processus de mélange, on laisse le concentré de levain se réchauffer de manière à atteindre au maximum 25 à 32 °C pour ensuite le refroidir au cours d'une période de 72 heures de manière à atteindre une température de pâte d'environ 0 °c à 4 °C, préférentiellement de 2 °C.

6. Procédé de préparation d'un concentré de levain selon l'une des précédentes revendications 1 à 5, **caractérisé en ce que** l'on mélange au moins un produit de meunerie thermiquement modifié, de la levure et de l'eau, pour obtenir une pâte fortement visqueuse voire solide puis la soumettre à une fermentation à l'état solide.

7. Procédé de fabrication de produits de boulangerie, préférentiellement de pain, **caractérisé en ce que** l'on mélange un concentré de levain préparé selon l'une des revendications précédentes 1 à 6 avec de la farine, de l'eau et du sel de cuisine pour obtenir une pâte finale puis la soumettre à un levage direct.

8. Procédé selon la revendication 7, **caractérisé en ce que**, pour obtenir une pâte finale en utilisant de la farine de blé, on met en oeuvre le concentré de levain selon l'une des revendications 1 à 6 dans une proportion comprise entre 1,5 et 5 % en poids.

9. Procédé selon la revendication 7, **caractérisé en ce que** le gluten des produits de meunerie thermiquement modifiés subit une dénaturation à au moins 60 %.

10. Procédé selon la revendication 8, **caractérisé en ce que** les produits de meunerie thermiquement modifiés représentent 6 à 50 % en poids, de préférence 22 à 39 % en poids, dudit concentré de levain.
